# EUROPÄISCHE PATENTSCHRIFT

(11) **EP 2 424 714 B1**
(45) Veröffentlichungstag und Bekanntmachung des Hinweises auf die Patenterteilung: **14.05.2014**
(21) Anmeldenummer: 10726420.2
(22) Anmeldetag: 19.05.2010
(51) Int. Cl.: B26D 7/01, B26D 7/06

(54) **VORRICHTUNG UND VERFAHREN ZUM AUFSCHNEIDEN VON LEBENSMITTELPRODUKTEN**
APPARATUS AND METHOD FOR SLICING FOODSTUFF
PROCEDE ET DISPOSITIF POUR DECOUPER DES PRODUITS ALIMENTAIRES

(30) Priorität: 03.06.2009 DE 102009023730
(43) Veröffentlichungstag der Anmeldung: 07.03.2012
(73) Patentinhaber: Weber Maschinenbau GmbH Breidenbach, 35236 Breidenbach (DE)
(72) Erfinder: WEBER, Günther, 17094 Gross Nemerow (DE)
(74) Vertreter: Manitz, Finsterwald & Partner GbR
(86) Internationale Anmeldenummer: PCT/EP2010/003074
(87) Internationale Veröffentlichungsnummer: WO 2010/139402

(56) Entgegenhaltungen:
- WO-A2-2005/037501
- US-A- 4 428 263

## Beschreibung

Die vorliegende Erfindung betrifft eine Vorrichtung und ein Verfahren zum Aufschneiden von Lebensmittelprodukten.

Im Stand der Technik sind verschiedenartige Lebensmittel-Schneidvorrichtungen bekannt. Es werden beispielsweise so genannte Hochleistungs-Slicer eingesetzt, um Lebensmittelprodukte, wie z.B. Fleisch, Wurst oder Käse, mit hoher Schnittgeschwindigkeit aufzuschneiden. In dem Bemühen, die Schnittleistung weiter zu erhöhen, können derartige Vorrichtungen eine Produktzuführung aufweisen, die dazu ausgebildet ist, mehrere Produktlaibe oder Produktriegel - im Folgenden einfach: Produkte - parallel nebeneinander einem gemeinsamen Schneidmesser zuzuführen, das sich in einer Schneidebene bewegt, die senkrecht zur Produktförderrichtung verläuft. Auf diese Weise ist es möglich, eine einzige Schneidvorrichtung - mit entsprechend großem Messer - zum gleichzeitigen Schneiden mehrerer Produkte zu nutzen.

Ein derartiger Hochleistungs-Slicer mit unabhängigen Produktzuführungen für zwei parallel zu fördernde und somit gleichzeitig aufzuschneidende Produkte ist in der europäischen Patentschrift EP 0713 753 B1 beschrieben. Bei diesem Slicer wird jedes aufzuschneidende Produkt mittels einer eigenen angetriebenen Greifkralle, die am hinteren Produktende angreift, in Richtung des Messers geschoben. Die Greifkrallen weisen jeweils einen eigenen Antrieb auf und sind demgemäß vollkommen unabhängig voneinander mit unterschiedlichen Vorschubgeschwindigkeiten antreibbar, sodass es möglich ist, die Dicke der abgetrennten Produktscheiben für die geförderten Produkte mittels der einzelnen Produktzuführantriebe unabhängig voneinander während des Aufschneidens zu verändern. Eine ähnliche Vorrichtung ist auch aus der WO 2005/037501 A2 bekannt.

Slicer mit voneinander unabhängigen Produktzuführantrieben für zwei gleichzeitig aufzuschneidende Produkte sind außerdem aus US 3,605,837 und US 3,827,319 bekannt. Jedes Produkt ist hierbei während des Aufschneidens zwischen zwei gegenüberliegenden Endlosbandförderern eingeklemmt, die vertikal orientiert sind und das Produkt sowohl halten als auch mit einer veränderbaren Zuführrate einer Schneidebene zuführen können. Jedes für jeweils ein Produkt vorgesehene Paar von Endlosbandförderern besitzt einen eigenen Antrieb für die Produktzufuhr, wobei die Antriebe vollkommen unabhängig voneinander sind, sodass die Produktzuführraten der aufzuschneidenden Produkte unabhängig voneinander verändert werden können.

Problematisch bei diesen bekannten Vorrichtungen ist vor allem der relativ hohe Aufwand, der zum Bereitstellen mehrerer voneinander unabhängiger Antriebe einschließlich der zugehörigen Ansteuerungseinrichtungen notwendig ist.

Es ist daher eine Aufgabe der Erfindung, das gleichzeitige Aufschneiden mehrerer parallel geförderter Lebensmittelprodukte zu vereinfachen, wobei für jedes Produkt die Dicke der abgetrennten Produktscheiben individuell veränderbar sein soll.

Die Aufgabe wird zum einen durch eine Vorrichtung mit den Merkmalen des Anspruchs 1 gelöst.

Die erfindungsgemäße Vorrichtung weist eine Produktzuführung auf, die mehrere parallel nebeneinander angeordnete Fördereinrichtungen umfasst, die gemeinsam antreibbar sind, um gleichzeitig mehrere Produkte, denen jeweils eine der Fördereinrichtungen zugeordnet ist, einer Schneidebene zuzuführen, in der sich wenigstens ein Schneidmesser, insbesondere rotierend und/oder umlaufend, bewegt. Die Fördereinrichtungen weisen einen gemeinsamen Antrieb auf und umfassen jeweils einen Riementrieb mit einer von dem gemeinsamen Antrieb antreibbaren Primärwelle, einer Sekundärwelle und einem Riemen mit zwei zwischen der Primärwelle und der Sekundärwelle verlaufenden Trumen. Jedem Riementrieb ist eine Einstellvorrichtung zugeordnet, die dazu ausgebildet ist, die Lauflängen des Riemens in den beiden Trumen unter Beibehaltung der Gesamtlauflänge zu verändern, um die Drehzahl der Sekundärwelle und damit die Einzelfördergeschwindigkeit der Fördereinrichtung individuell zu verändern.

Erfindungsgemäß wurde zum einen erkannt, dass bei Schneidvorrichtungen der gattungsgemäßen Art in der Praxis meist hinsichtlich ihrer äußeren Form weitgehend übereinstimmende Produkte aufzuschneiden sind, welche lediglich in einem relativ geringen Ausmaß bezüglich ihres Querschnitts variieren. Um entweder einzelne Produktscheiben oder Portionen von Produktscheiben gleichen Gewichts zu produzieren, können die Produkte also im Wesentlichen mit der gleichen Geschwindigkeit gefördert werden, wobei lediglich relativ geringfügige Anpassungen zur exakten Einhaltung des vorgegebenen Scheiben- oder Portionsgewichts erforderlich sind. Diese Anpassungen sind nicht nur für jedes Produkt selbst relativ geringfügig, sondern liegen außerdem für alle gleichzeitig aufzuschneidenden Produkte in der gleichen Größenordnung. Diesen Umstand nutzt die Erfindung aus.

Zum anderen wurde erfindungsgemäß erkannt, dass ein individuelles Einstellen der Einzelfördergeschwindigkeit jeder Fördereinrichtung auf einfache Weise dadurch realisiert werden kann, dass jeder Fördereinrichtung ein eigener Riementrieb mit verstellbaren Riemenlauflängen in den Trumen zugeordnet ist. Die Primärwelle jedes Riementriebs kann durch den gemeinsamen Antrieb angetrieben werden, wobei es der jeweiligen Anwendung überlassen bleibt, ob eine einzige gemeinsame Primärwelle für alle Riementriebe vorgesehen ist oder ob jeder Riementrieb eine separat gelagerte Primärwelle aufweist und alle Primärwellen, gegebenenfalls unter Zwischenschaltung geeigneter Getriebekomponenten, von dem gemeinsamen Antrieb angetrieben werden.

Durch eine gezielte Änderung der Lauflängen des Riemens in den Trumen unter Beibehaltung der Gesamtlauflänge, also zum Beispiel durch eine Lauflängenvergrößerung im Obertrum bei gleichzeitiger entsprechender Lauflängenverringerung im Untertrum, kann trotz gleichbleibender Drehzahl der Primärwelle vorübergehend die Drehzahl der Sekundärwelle variiert werden. Dadurch, dass die Drehzahl der Sekundärwelle variabel ist, kann die Einzelfördergeschwindigkeit für jede einzelne Fördereinrichtung unter Konstanthaltung der Drehzahl der Primärwelle individuell verändert werden.

Insgesamt lässt sich erfindungsgemäß der Konstruktions- und Herstellungsaufwand für einen Slicer der gattungsgemäßen Art beträchtlich reduzieren, indem ein Satz von parallelen Fördereinrichtungen vorgesehen wird, welche gemeinsam angetrieben, aber individuell einstellbar sind.

Die Einstellvorrichtungen für die Riementriebe können auf unterschiedliche Weise gestaltet sein. Insbesondere kann jede Einstellvorrichtung zur Veränderung der Lauflängen an jedem Trum einen variablen Pufferbereich zur Aufnahme bzw. Abgabe eines von der Primärwelle ablaufenden bzw. auf die Primärwelle auflaufenden Riemenabschnitts umfassen. Im stationären Betrieb hat ein derartiger Pufferbereich keinen Einfluss auf die Drehzahl der Sekundärwelle, da der Riemen, sofern er als nicht dehnbar angenommen wird, überall mit gleicher Bahngeschwindigkeit umläuft. Wenn sich jedoch die Größe des Pufferbereichs ändert, so läuft während der Änderung nicht mehr exakt die von der Primärwelle ablaufende Riemenlänge auf die Sekundärwelle auf, sondern ein entsprechend größerer oder kleinerer Betrag, was sich unmittelbar auf die Bahngeschwindigkeit des Riemens in dem Trumabschnitt zwischen dem Pufferbereich und der Sekundärwelle und somit auf die Drehzahl der Sekundärwelle auswirkt.

Während des Variierens des Pufferbereichs kann somit also die Drehbewegung der Sekundärwelle beschleunigt oder verzögert werden. Grundsätzlich kann auf diese Weise sogar ein kurzzeitiger Stillstand oder eine Drehrichtungsumkehr der Sekundärwelle erreicht werden. Für die in der Praxis relevanten Anwendungen ist eine derartige dynamische Anpassung der Einzelfördergeschwindigkeiten ausreichend, um die gewünschte Konstanz des Scheiben- oder Portionsgewichts für jedes der gleichzeitig aufzuschneidenden Produkte zu gewährleisten.

Vorzugsweise sind für jeden Riemen die Lauflängen während des Aufschneidebetriebs bei umlaufendem Riemen mit einer vorbestimmten Änderungsgeschwindigkeit veränderbar. Das Anpassen der Einzelfördergeschwindigkeit kann somit gewissermaßen "online" erfolgen, ohne dass eine Verzögerung oder Unterbrechung des fortlaufenden Schneidebetriebs nötig wäre. Insbesondere können so auch Produkte mit einer in Längsrichtung veränderlichen Querschnittsform unter Beibehaltung eines einheitlichen Scheiben- oder Portionsgewichts aufgeschnitten werden, was eine ständige Anpassung der Einzelfördergeschwindigkeit während des Aufschneidens erfordert. Bevorzugt sind die Lauflängen des Riemens stufenlos veränderbar, um eine exakte Anpassung der jeweiligen Einzelfördergeschwindigkeit an die aktuellen Gegebenheiten bzw. jeweiligen Erfordernisse zu gewährleisten. Das Ausmaß der Erhöhung bzw. Verringerung der Einzelfördergeschwindigkeit hängt direkt vom Betrag der Änderungsgeschwindigkeit der Lauflängen ab, der somit geeignet gewählt werden kann. Je schneller z.B. der von der Primärwelle ablaufende Riemen in einem zusätzlich entstehenden Puffer "aufgefangen" oder "gespeichert" wird, umso stärker verringert sich die Drehzahl der Sekundärwelle. Umgekehrt erhöht sich die Drehzahl der Sekundärwelle umso stärker, je schneller zusätzliche Riemenlänge von einem schrumpfenden Puffer, auf den der von der Primärwelle ablaufende Riemen gelangt, "freigegeben" wird.

Gemäß einer Ausgestaltung der Erfindung ist zumindest an einem Trum, bevorzugt an jedem Trum, eine bewegbare Umlenkeinrichtung für den Riemen vorgesehen. Dadurch kann auf einfache Weise ein Pufferbereich von variabler Lauflänge geschaffen werden. Gemäß einer Ausführungsform ist die Umlenkeinrichtung ausschließlich translatorisch bewegbar. Alternativ kann die Umlenkeinrichtung ausschließlich durch Drehen bewegbar sein, um den mechanischen Aufwand zu verringern.

Gemäß einer weiteren Ausführungsform ist die Umlenkeinrichtung zumindest zu einem wesentlichen Teil zwischen den Trumen des Riemens angeordnet. Der Riementrieb mit der ihm zugeordneten Einstellvorrichtung kann somit besonders platzsparend realisiert werden.

Die Umlenkeinrichtung kann wenigstens eine, insbesondere quer zur Drehachse der Primärwelle, bewegbare Tänzerrolle umfassen, wobei insbesondere der Tänzerrolle wenigstens eine ortsfeste Umlenkrolle zugeordnet ist. Beispielsweise kann eine rechtwinklig zur jeweiligen Trumebene verschiebbare und von zwei stationären Umlenkrollen eingefasste Tänzerrolle vorgesehen sein, welche eine Schlaufe von veränderlicher Größe für den Riemen bildet. Die Schlaufe stellt den variablen Pufferbereich dar.

Gemäß einer weiteren Ausführungsform umfasst die Umlenkeinrichtung ein um eine Schwenkachse verdrehbares Umlenkrollenpaar, wobei der Riemen zwischen den beiden Umlenkrollen hindurch läuft. Bei einer derartigen Anordnung wird keine Schlaufe gebildet. Insbesondere findet die Umlenkung des Riemens vielmehr im Sinne eines "zickzack"-artigen Verlaufs statt.

Bevorzugt sind an den Trumen gegensinnig bewegbare Umlenkeinrichtungen vorgesehen.

Vorzugsweise können an den Trumen synchron bewegbare Umlenkeinrichtungen vorgesehen sein. Auf diese Weise ist sichergestellt, dass die Gesamtlauflänge des Riemens stets konstant ist.

An jedem Trum kann eine Umlenkeinrichtung vorgesehen sein, wobei die Umlenkeinrichtungen zwangsgekoppelt und insbesondere an einem gemeinsamen, zum Verändern der Lauflängen des Riemens bewegbaren Träger montiert sind. Ein derartiger für die Umlenkeinrichtungen vorgesehener gemeinsamer Träger kann rein translatorisch oder rein rotatorisch bewegbar sein. Gemäß einer Ausgestaltung der Erfindung ist an jedem Trum eine Umlenkeinrichtung vorgesehen, wobei die Umlenkeinrichtungen baugleich ausgeführt sind. Insbesondere können die Umlenkeinrichtungen spiegelbildlich aufgebaut oder angeordnet sein. Durch eine derartige symmetrische Anordnung von zwei baugleichen Umlenkeinrichtungen kann auf konstruktiv einfache Weise eine erfindungsgemäße Einstellvorrichtung für einen Riementrieb bereitgestellt werden.

Gemäß einer Ausführungsform ist an dem einen Trum eine aktiv verstellbare Umlenkeinrichtung vorgesehen, wobei an dem anderen Trum eine passive, insbesondere federbelastete, Umlenkeinrichtung vorgesehen ist, die der Verstellbewegung der aktiven Umlenkeinrichtung folgt. Bei der passiven Umlenkeinrichtung kann es sich z.B. um eine mit Federkraft beaufschlagte Spannrolle handeln, die mit demjenigen Trum zusammenwirkt, an dem keine aktive Verstellung stattfindet. Eine derartige Spanneinrichtung sorgt auch ohne aktive Verstellung stets für den erforderlichen Längenausgleich.

Gemäß einer Ausgestaltung der Erfindung ist jeder Riementrieb zwischen den gemeinsamen Antrieb und die zugehörige Fördereinrichtung geschaltet. Beispielsweise bildet die Sekundärwelle die Antriebswelle für die entsprechende Fördereinrichtung. Der Riementrieb wirkt insofern also als Getriebekomponente mit variablem Übersetzungsverhältnis und ermöglicht so eine individuell einstellbare Einzelfördergeschwindigkeit für jede Fördereinrichtung bei einem für alle Fördereinrichtungen vorgesehenen gemeinsamen Antrieb.

Jede Fördereinrichtung kann einen Bandförderer mit einer Welle umfassen, die von der Sekundärwelle des Riementriebs gebildet oder mit der Sekundärwelle des Riementriebs gekoppelt ist. Das heißt, die Bandförderer besitzen einen gemeinsamen Antrieb, mit dem jeder Bandförderer über seinen Riementrieb verbunden ist. Durch eine Änderung der Drehzahl der Sekundärwelle des Riementriebs wird unmittelbar eine Änderung der Bahngeschwindigkeit eines umlaufenden Bandgurts des Bandförderers bewirkt.

Gemäß einer weiteren Ausführungsform ist jeder Riementrieb selbst als Bandförderer ausgebildet, wobei der Riemen als Produktauflage für ein aufzuschneidendes Produkt dient. Insbesondere kann der Riemen als Endlosbandgurt ausgebildet sein. Bei dieser Ausführungsform der Erfindung ist nicht die Änderung der Drehzahl der Sekundärwelle von Interesse, sondern die Änderung der letztlich die Einzelfördergeschwindigkeit darstellenden Bahngeschwindigkeit des als Produktauflage ausgebildeten Bandgurts.

Weiterhin kann jedem Bandgurt ein oberer Bandgurt zugeordnet sein, der dazu ausgebildet ist, die Oberseite des Produktes zu beaufschlagen. Das Produkt wird dann, insofern wie in dem eingangs genannten Stand der Technik, von dem unteren Bandgurt und dem oberen Bandgurt gemeinsam gefördert. Jeder obere Bandgurt kann antreibbar und mit seinem als Produktauflage dienenden Bandgurt synchronisierbar sein. Alternativ kann der obere Bandgurt selbst ohne Antrieb und lediglich frei laufend ausgebildet sein, sodass die obere Bandeinheit eine Niederhaltefunktion ausübt, wodurch eine besonders zuverlässige Produktpositionierung, -halterung bzw. -führung während des Aufschneidens erreicht wird. Das aufzuschneidende Produkt wird also gewissermaßen zwischen zwei umlaufenden, einander gegenüberliegenden Bandgurten eingeklemmt und auf diese Weise gefördert.

Die Lösung der Aufgabe erfolgt zum anderen durch ein Verfahren mit den Merkmalen des Anspruchs 12.

Bei dem erfindungsgemäßen Verfahren zum Aufschneiden von Lebensmittelprodukten werden mittels einer Produktzuführung, die mehrere parallel nebeneinander angeordnete Fördereinrichtungen umfasst, gleichzeitig mehrere Produkte einer Schneidebene zugeführt, in der sich wenigstens ein Schneidmesser, insbesondere rotierend und/oder umlaufend, bewegt. Die Fördereinrichtungen, welche jeweils einen Riementrieb mit einer von dem gemeinsamen Antrieb antreibbaren Primärwelle, einer Sekundärwelle und einem Riemen mit zwei zwischen der Primärwelle und der Sekundärwelle verlaufenden Trumen umfassen, werden mittels eines gemeinsamen Antriebs angetrieben. Für jeden Riemen werden die Lauflängen in den beiden Trumen unter Beibehaltung der Gesamtlauflänge bei Bedarf individuell verändert, um für jedes Produkt die Dicke abzutrennender Produktscheiben individuell einzustellen.

Gemäß einer Ausführungsform wird jede Fördereinrichtung von dem gemeinsamen Antrieb über den zugehörigen Riementrieb, insbesondere über die zugehörige Sekundärwelle, angetrieben.

Gemäß einer weiteren Ausführungsform ist jeder Riementrieb selbst als Bandförderer ausgebildet, wobei die Produkte, während sie der Schneidebene zugeführt werden, auf dem Riemen aufliegen.

Gemäß einer Weiterbildung der Erfindung werden für jeden Riemen die Lauflängen in den beiden Trumen in Abhängigkeit von der Kontur des Produktes verändert, wobei vorzugsweise die Kontur des Produktes mit einer in die Vorrichtung integrierten Erfassungseinrichtung ermittelt wird.

Die Erfindung wird im Folgenden unter Bezugnahme auf die Zeichnung beispielhaft beschrieben.
- Fig. 1: zeigt eine Draufsicht auf den Produktzuführungsbereich einer erfindungsgemäßen Schneidvorrichtung gemäß einer ersten Ausführungsform.
- Fig. 2A: zeigt eine Seitenansicht der Schneidvorrichtung gemäß Fig. 1.
- Fig. 2B: zeigt eine Seitenansicht einer Schneidvorrichtung gemäß einer zweiten Ausführungsform.
- Fig. 3: zeigt eine Seitenansicht einer Schneidvorrichtung gemäß einer dritten Ausführungsform.
- Fig. 4: zeigt eine Seitenansicht einer Schneidvorrichtung gemäß einer vierten Ausführungsform.
- Fig.5A-C: zeigen Seitenansichten einer Schneidvorrichtung gemäß einer fünften Ausführungsform.
- Fig. 6: zeigt eine Seitenansicht einer Schneidvorrichtung gemäß einer sechsten Ausführungsform.

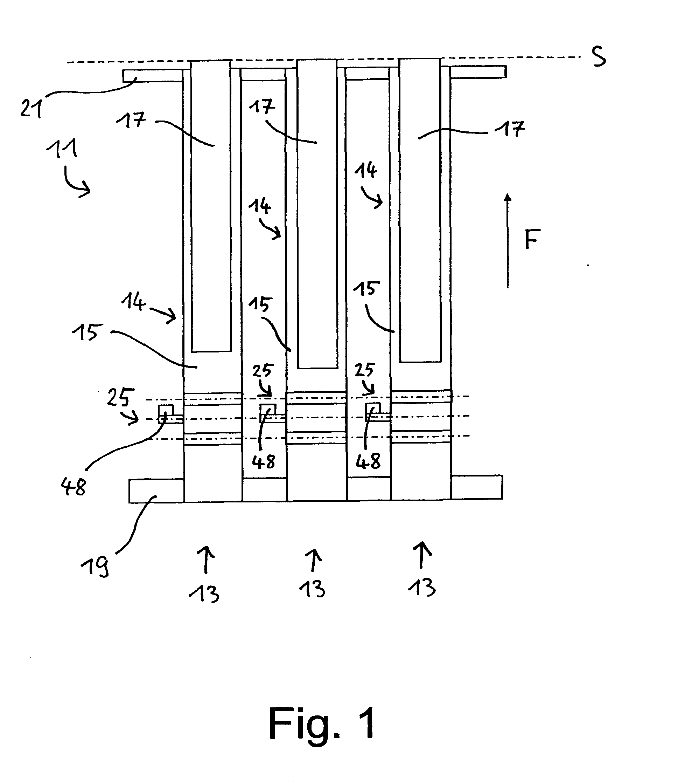

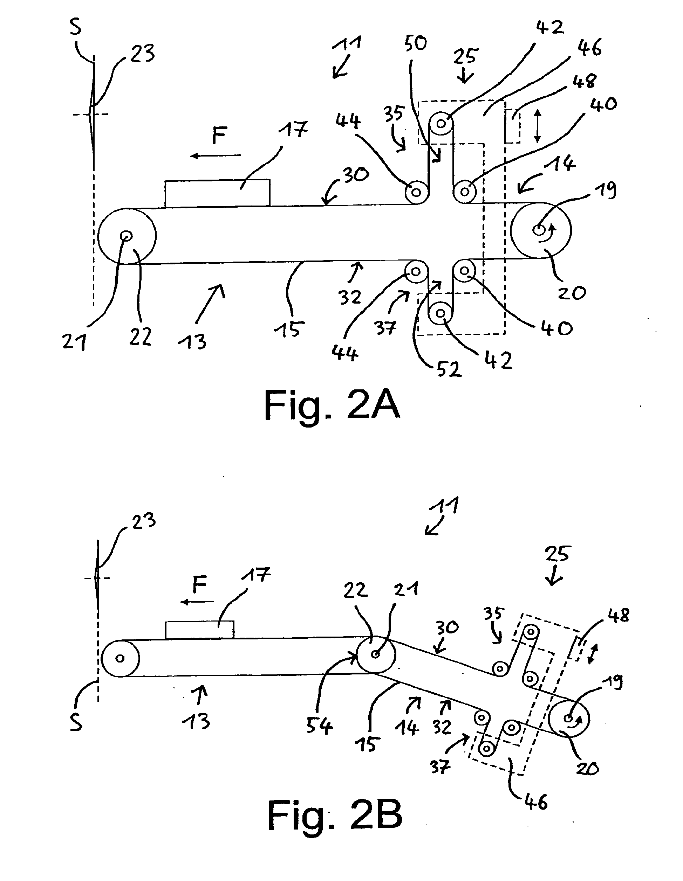

In Fig. 1 und 2A ist eine Schneidvorrichtung gemäß einer ersten Ausführungsform der Erfindung dargestellt. Die Schneidvorrichtung umfasst eine Produktzuführung 11 mit in diesem Beispiel drei nebeneinander angeordneten und parallel zueinander ausgerichteten Fördereinrichtungen 13. Die Fördereinrichtungen 13 sind jeweils in Form eines Riementriebs 14 mit einer Primärwelle 19, einer Sekundärwelle 21 und einem Riemen 15 ausgebildet. Der Riemen 15 ist hier ein Endlosbandgurt, z.B. ein nicht elastischer, flacher Zahnriemen, und dient als Auflage für ein aufzuschneidendes Produkt 17. Jeder Riementrieb 14 weist gemäß Fig. 2A ein Obertrum 30 und ein Untertrum 32 auf, welche sich jeweils zwischen der Primärwelle 19 und der Sekundärwelle 21 erstrecken. Die Riementriebe 14 werden durch die gemeinsame Primärwelle 19 angetrieben, auf welcher jeweilige Antriebsrollen 20 sitzen. Die Riemen 15 laufen frei um die Sekundärwelle 21 mit Laufrollen 22 um, wobei die Laufrollen 22 nahe einer Schneidebene S angeordnet sind.

In der Schneidebene S läuft ein Schneidmesser 23 (Fig. 2A) planetarisch um, wobei alternativ auch ein nicht-planetarisch umlaufendes, sondern lediglich rotierendes Schneidmesser, insbesondere ein Sichelmesser, Verwendung finden kann. Statt auf der gemeinsamen Sekundärwelle 21 können die Laufrollen 22 auch separat gelagert sein.

Durch Antreiben der Antriebsrollen 20 mittels der gemeinsamen Primärwelle 19 werden die auf dem Obertrum 30 aufliegenden Produkte 17 gleichzeitig und parallel zueinander entlang einer Produktförderrichtung F der Schneidebene S zugeführt.

Der Antrieb der Antriebsrollen 20 muss nicht direkt durch eine gemeinsame koaxiale Primärwelle 19 erfolgen. Je nach Ausführungsform ist es auch möglich, dass unterschiedliche Getriebekomponenten als Zwischenglied zwischen einem gemeinsamen Antriebselement und einzelnen Primärwellen 19 vorgesehen sind. An irgendeiner Stelle der Schneidvorrichtung ist jedoch ein gemeinsamer Antrieb, insbesondere in Form einer gemeinsamen Antriebswelle, für alle Fördereinrichtungen 13 vorhanden.

Jedem Riementrieb 14 ist eine Einstellvorrichtung 25 zugeordnet, die unter besonderer Bezugnahme auf Fig. 2A genauer beschrieben wird. Die Einstellvorrichtung 25 umfasst eine am Obertrum 30 angeordnete obere Umlenkeinrichtung 35 für den Riemen 15 sowie eine am Untertrum 32 angeordnete untere Umlenkeinrichtung 37 für den Riemen 15. Jede der Umlenkeinrichtungen 35, 37 umfasst eine erste Umlenkrolle 40, eine Tänzerrolle 42 sowie eine zweite Umlenkrolle 44, um welche der Riemen 15 umläuft. Während die Umlenkrollen 40, 44 ortsfest sind, sind die beiden Tänzerrollen 42 auf einem gemeinsamen Träger 46 montiert, welcher mittels einer Stellvorrichtung 48 rechtwinklig zu der Produktförderrichtung F relativ zu der Primärwelle 19 verschiebbar ist.

Die Umlenkeinrichtungen 35, 37 definieren jeweils eine Schlaufe 50, 52 für den Riemen 15, wodurch die Gesamtlauflänge des Riemens 15 gegenüber einer Konfiguration mit geradlinigen Trumen erhöht ist. Bei einer Verschiebung des Trägers 46 in Fig. 2A nach oben vergrößert sich die Lauflänge des Riemens 15 im Obertrum 30, während sich die Lauflänge des Riemens 15 im Untertrum 32 um den gleichen Betrag verringert. Die Gesamtlauflänge des Riemens 15 bleibt konstant. Jedoch nimmt die obere Riemenschlaufe 50 während der Aufwärtsbewegung des Trägers 46 einen zusätzlichen Riemenabschnitt auf, sodass der pro Zeiteinheit auf die Sekundärwelle 21 auflaufende Riemenabschnitt kürzer ist als der von der Primärwelle 19 ablaufende Riemenabschnitt. Die Folge ist eine Verringerung der Bahngeschwindigkeit des Riemens 15, die sich auf den Abschnitt des Obertrums 30 zwischen der oberen Umlenkeinrichtung 35 und der Sekundärwelle 21 und den Abschnitt des Untertrums 32 zwischen der Sekundärwelle 21 und der unteren Umlenkeinrichtung 37 sowie auf den Zeitraum der Aufwärtsbewegung des Trägers 46 beschränkt und zu einer entsprechenden Verringerung der Drehzahl der Sekundärwelle 21 führt. In analoger Weise resultiert eine Erhöhung der Bahngeschwindigkeit und damit der Drehzahl der Sekundärwelle 21 während einer Abwärtsbewegung des Trägers 46.

Die Tänzerrollen 42 müssen nicht wie in Fig. 2A gezeigt exakt übereinander angeordnet sein. Je nach den Platzverhältnissen der zugehörigen Anwendung können sie auch seitlich zueinander versetzt sein.

In einem Grundzustand der Schneidvorrichtung laufen alle Riemen 15 mit einer gemeinsamen Basisfördergeschwindigkeit um, sodass alle aufliegenden Produkte 17 "gleich schnell sind" und die Dicke der abgetrennten Produktscheiben somit für alle Fördereinrichtungen 13 gleich ist. Durch Ansteuern der Stellvorrichtungen 48 und eine entsprechende Linearverschiebung der Träger 46 kann die Einzelfördergeschwindigkeit jeder Fördereinrichtung 13 entweder beschleunigt oder verzögert, also in Bezug auf den Wert der Basisfördergeschwindigkeit entweder erhöht oder erniedrigt werden. Diese individuelle Variation der Einzelfördergeschwindigkeiten der Fördereinrichtungen 13 erfolgt trotz des gemeinsamen Antriebs der Riementriebe 14 durch die mit konstanter Drehzahl rotierende gemeinsame Primärwelle 19. Da jeder Fördereinrichtung 13 eine eigene Einstellvorrichtung 25 zugeordnet ist, können die Einzelfördergeschwindigkeiten individuell variiert werden.

In Fig. 1 ist die individuelle Einstellung der Einzelfördergeschwindigkeiten durch eine unterschiedliche Stellung der Produkte 17 in Bezug auf die Schneidebene S veranschaulicht, wobei zum besseren Verständnis angenommen wird, dass die Produkte 17 ursprünglich die gleiche Länge besaßen. Demgemäß eilt das in Fig. 1 links befindliche Produkt 17 momentan den anderen Produkten voraus, sodass es momentan die kleinste Restlänge besitzt. Da das Schneidmesser 23 (Fig. 2A) mit konstanter Schneidfrequenz durch alle zugestellten Produkte 17 hindurchschneidet, fallen die von den Produkten 17 abgetrennten Produktscheiben umso dicker aus, je größer die Einzelfördergeschwindigkeit der jeweiligen Fördereinrichtung 13 momentan ist.

Bei der in Fig. 1 und 2A dargestellten Ausführungsform ist jeder Riementrieb 14 selbst als Fördereinrichtung 13 ausgebildet und der Riemen 15 bildet direkt die Auflage für die Produkte 17. Demgegenüber zeigt Fig. 2B eine alternative Ausführungsform, bei welcher der Riementrieb 14 zwischen den gemeinsamen Antrieb und eine Fördereinrichtung 13 geschaltet ist, wobei die Fördereinrichtung 13 hier als Bandförderer ausgebildet ist. Die Sekundärwelle 21 des Riementriebs 14 fungiert hier jeweils als Abtriebswelle, welche drehfest mit einer Welle 54 der Fördereinrichtung 13 gekoppelt ist.

Da bei einer Verschiebung des Trägers 46 nicht nur eine Änderung der Bahngeschwindigkeit des Riemens 15 in den jeweiligen Trumabschnitten auftritt, sondern auch eine Änderung der Drehzahl der Sekundärwelle 21, kann der Riementrieb 14 somit als stufenlos verstellbares Zwischengetriebe zwischen dem gemeinsamen Antrieb und der jeweiligen Fördereinrichtung 13 eingesetzt werden.

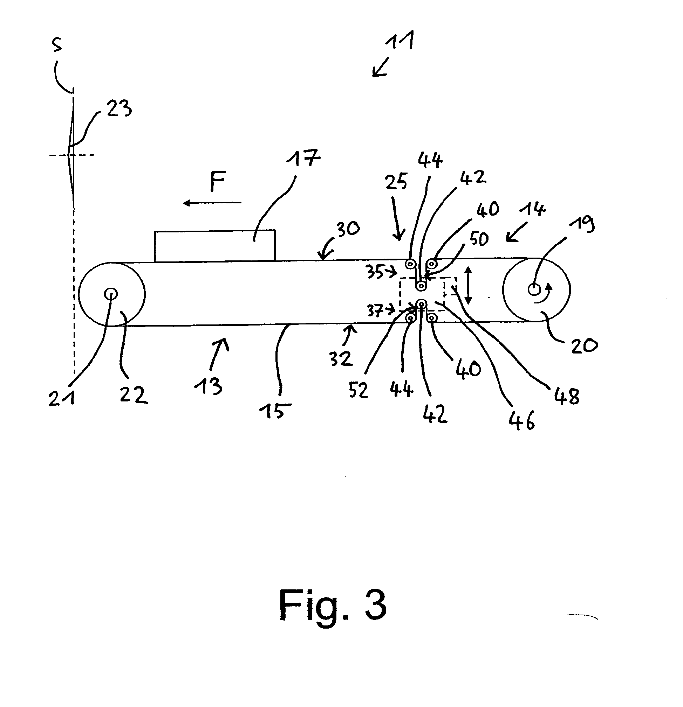

In Fig. 3 ist eine Schneidvorrichtung gemäß einer weiteren Ausführungsform der Erfindung dargestellt. Wie bei der in Fig. 1 und 2A dargestellten ersten Ausführungsform ist jede Fördereinrichtung 13 hier durch den Riementrieb 14 selbst gebildet, wobei dem Riementrieb 14 eine Einstellvorrichtung 25 zugeordnet ist, welche zwei Umlenkeinrichtungen 35, 37 mit jeweils zwei Umlenkrollen 40, 44 und einer verschiebbaren Tänzerrolle 42 umfasst. Die Tänzerrollen 42 sind wiederum auf einem gemeinsamen Träger 46 montiert. Die Umlenkeinrichtungen 35, 37 sind hier jedoch zwischen dem Obertrum 30 und dem Untertrum 32 angeordnet, sodass keine Teile der Einstellvorrichtung 25 in Bezug auf die Trumebenen nach außen ragen. Die Einstellvorrichtungen 25 gemäß dieser Ausführungsform können somit besonders platzsparend untergebracht werden, wobei die Funktionsweise derjenigen der Vorrichtung von Fig. 2A entspricht.

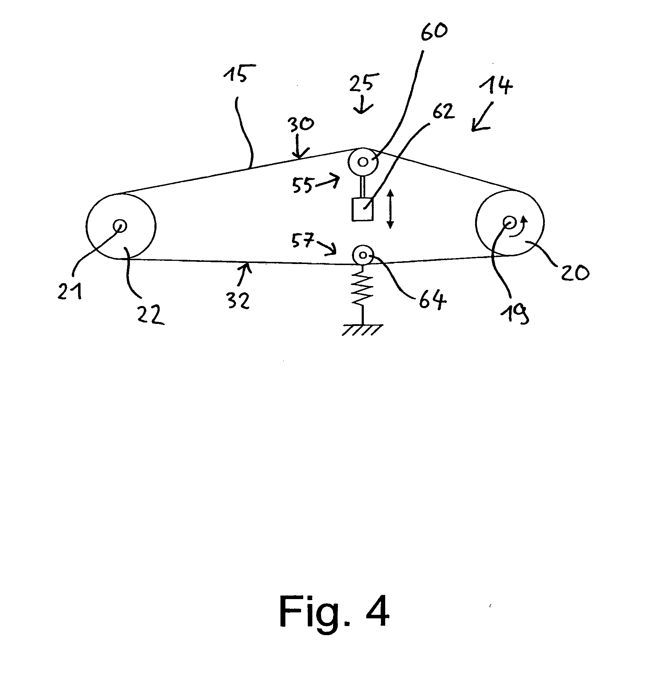

Fig. 4 zeigt eine Schneidvorrichtung gemäß einer weiteren Ausführungsform der Erfindung. Die obere Umlenkeinrichtung 55 ist hier durch eine einzelne Umlenkrolle 60 gebildet, welche mittels einer Einstelleinrichtung 62 quer zu der Drehachse der Primärwelle 19 aufwärts und abwärts verschiebbar ist. Als untere Umlenkeinrichtung 57 ist eine federbelastete Spannrolle 64 vorgesehen. Die untere Umlenkeinrichtung 57 ist also nicht aktiv verstellbar, sondern sorgt lediglich passiv für den notwendigen Lauflängenausgleich. Bei dieser Ausführungsform ist der mechanische Aufwand aufgrund des Verzichts auf den gemeinsamen Träger sowie auf Umlenkrollen reduziert.

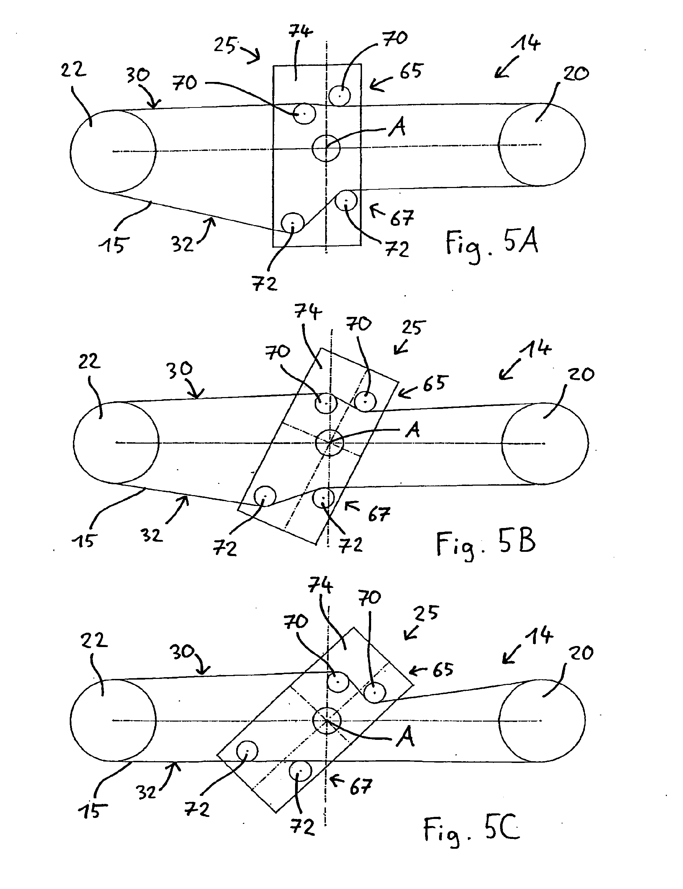

In den Fig. 5A bis 5C ist eine Schneidvorrichtung gemäß einer weiteren Ausführungsform der Erfindung dargestellt. Die Einstellvorrichtung 25 umfasst hier wie bei den Ausführungsformen gemäß Fig. 2A und 3 eine obere Umlenkeinrichtung 65 und eine untere Umlenkeinrichtung 57, welche jeweils aktiv verstellbar sind. Anstatt einer Tänzerrollenanordnung ist hier ein oberes Umlenkrollenpaar 70 und ein unteres Umlenkrollenpaar 72 vorgesehen, wobei der Riemen 15 zwischen den Umlenkrollen hindurchläuft. Die zwei Umlenkrollenpaare 70, 72 sind auf einer gemeinsamen Trägerplatte 74 montiert, welche um eine quer zu der Drehachse der Primärwelle 19 verlaufende Schwenkachse A verschwenkbar ist. Die durch die Abfolge der Fig. 5A bis 5C repräsentierte Drehbewegung der Trägerplatte 74 mit den Umlenkrollenpaaren 70, 72 führt eine Verlängerung der Lauflänge des Riemens 15 im Obertrum 30 und eine dementsprechende Verringerung der Lauflänge des Riemens 15 im Untertrum 32 herbei. Bei einer Umkehrung der Drehbewegung erfolgt demgemäß eine Verlängerung der Lauflänge des Riemens 15 im Untertrum 32 auf Kosten des Ober trums 30.

Der Riementrieb 14 gemäß Fig. 4 sowie der Riementrieb 14 gemäß Fig. 5A-5C können analog zu der in Fig. 2A dargestellten Ausführungsform anstatt als Fördereinrichtung 13 auch als verstellbares Getriebe für eine Fördereinrichtung ausgebildet sein.

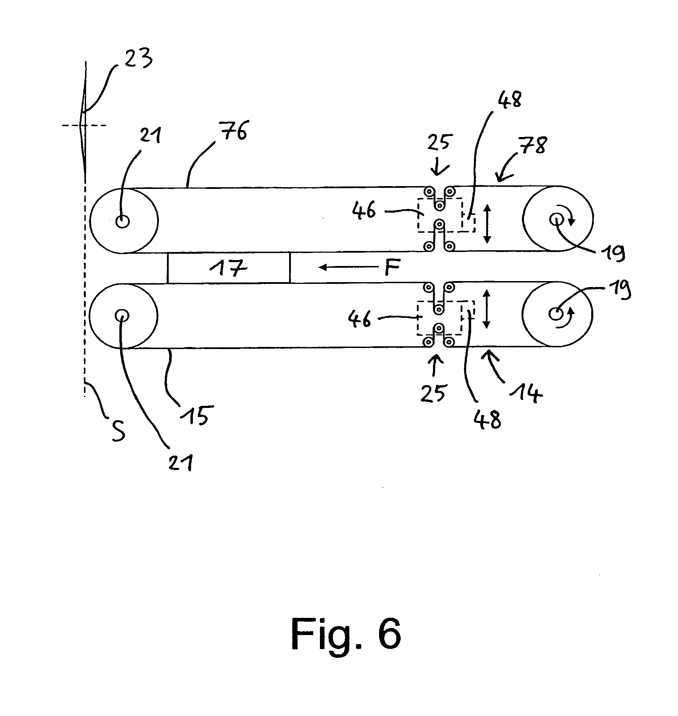

Fig. 6 zeigt eine weitere Ausführungsform der Erfindung. Bei dieser Variante ist jedem Riemen 15 ein oberer Riemen 76 zugeordnet, welcher die Oberseite des Produkts 17 beaufschlagt und so für eine zuverlässigere Produktführung während des Fördervorgangs sorgt. Das zu fördernde Produkt 17 ist zwischen den gegenüberliegenden Riemen 15, 76 eingeklemmt. Der obere Riemen 76 ist einem oberen Riementrieb 78 zugeordnet, welcher ebenso wie der untere Riementrieb 14 als Bandförderer ausgebildet ist und eine Einstellvorrichtung 25 wie die in Fig. 3 gezeigte umfasst. Damit die Laufgeschwindigkeit der beiden das Produkt 17 gemeinsam zuführenden Trums gleich groß ist, ist der obere Riementrieb 78 synchron zu dem unteren Riementrieb 14 angetrieben, wobei die Synchronisierung insbesondere dadurch erreicht wird, dass die Einstellvorrichtungen 25 stets in gleichem Maße verstellt werden. Dies kann entweder wie in Fig. 6 dargestellt mittels entsprechend angesteuerter einzelner Stellvorrichtungen 48 erreicht werden oder durch eine geeignete mechanische Kopplung der jeweiligen verschiebbaren Träger 46. Entsprechend sind auch die beiden Primärwellen 19 synchronisiert.

Alternativ kann vorgesehen sein, dass der obere Riementrieb 78 nicht angetrieben wird und der obere Riemen 76 lediglich frei umläuft.

Dadurch, dass erfindungsgemäß die Einzelfördergeschwindigkeiten der Fördereinrichtungen 13 individuell einstellbar sind, können die Dicken der abgetrennten Produktscheiben für jede Fördereinrichtung 13 individuell angepasst werden, ohne dass deshalb für jede Fördereinrichtung 13 ein eigener Antrieb vorzusehen wäre. Der Aufwand und die Kosten zur Bereitstellung der erfindungsgemäßen Produktzuführung 11 und somit des gesamten Slicers können somit gesenkt werden. Insbesondere kann trotz in Produktlängsrichtung variierender Produktquerschnittsflächen ein konstantes Scheiben- oder Portionsgewicht bei allen gleichzeitig zugeführten Produkten 17 sichergestellt werden.

### Bezugszeichenliste:

- 11: Produktzuführung
- 13: Fördereinrichtung
- 14: Riementrieb
- 15: Riemen
- 17: Produkt
- 19: Primärwelle
- 20: Antriebsrolle
- 21: Sekundärwelle
- 22: Laufrolle
- 23: Schneidmesser
- 25: Einstellvorrichtung
- 30: Obertrum
- 32: Untertrum
- 35: obere Umlenkeinrichtung
- 37: untere Umlenkeinrichtung
- 40: erste Umlenkrolle
- 42: Tänzerrolle
- 44: zweite Umlenkrolle
- 46: Träger
- 48: Stellvorrichtung
- 50: obere Schlaufe
- 52: untere Schlaufe
- 54: Welle
- 55: obere Umlenkeinrichtung
- 57: untere Umlenkeinrichtung
- 60: Umlenkrolle
- 62: Einstelleinrichtung
- 64: Spannrolle
- 65: obere Umlenkeinrichtung
- 67: untere Umlenkeinrichtung
- 70: oberes Umlenkrollenpaar
- 72: unteres Umlenkrollenpaar
- 74: Trägerplatte
- 76: oberer Riemen
- 78: oberer Riementrieb

- S: Schneidebene
- F: Produktförderrichtung
- A: Schwenkachse

## Patentansprüche

1. Vorrichtung zum Aufschneiden von Lebensmittelprodukten, insbesondere Hochleistungs-Slicer, mit
einer Produktzuführung (11), die mehrere parallel nebeneinander angeordnete Fördereinrichtungen (13) umfasst, die gemeinsam antreibbar sind, um gleichzeitig mehrere Produkte (17), denen jeweils eine der Fördereinrichtungen (13) zugeordnet ist, einer Schneidebene (S) zuzuführen, in der sich wenigstens ein Schneidmesser (23), insbesondere rotierend und/oder umlaufend, bewegt, wobei die Fördereinrichtungen (13) einen gemeinsamen Antrieb aufweisen und jeweils einen Riementrieb (14) mit einer von dem gemeinsamen Antrieb antreibbaren Primärwelle (19), einer Sekundärwelle (21) und einem Riemen (15) mit zwei zwischen der Primärwelle (19) und der Sekundärwelle (21) verlaufenden Trumen (30, 32) umfassen,
wobei jedem Riementrieb (14) eine Einstellvorrichtung (25) zugeordnet ist, die dazu ausgebildet ist, die Lauflängen des Riemens (15) in den beiden Trumen (30, 32) unter Beibehaltung der Gesamtlauflänge zu verändern, um die Drehzahl der Sekundärwelle (21) und damit die Einzelfördergeschwindigkeit der Fördereinrichtung (13) individuell zu verändern.

2. Vorrichtung nach Anspruch 1,
**dadurch gekennzeichnet,**
**dass** jede Einstellvorrichtung (25) zur Veränderung der Lauflängen an jedem Trum (30, 32) einen variablen Pufferbereich zur Aufnahme bzw. Abgabe eines von der Primärwelle (19) ablaufenden bzw. auf die Primärwelle (19) auflaufenden Riemenabschnitts umfasst.

3. Vorrichtung nach Anspruch 1 oder 2,
dadurch **gekennzeicnhnet,**
dass für jeden Riemen (15) die Lauflängen während des Aufschneidebetriebs bei umlaufendem Riemen (15) mit einer vorbestimmten Änderungsgeschwindigkeit veränderbar sind.

4. Vorrichtung nach einem der vorstehenden Ansprüche,
**dadurch gekennzeichnet,**
**dass** zumindest an einem Trum (30, 32), bevorzugt an jedem Trum (30, 32), eine bewegbare Umlenkeinrichtung (35, 37, 55, 57, 65, 67) für den Riemen (15) vorgesehen ist.

5. Vorrichtung nach Anspruch 4,
**dadurch gekennzeichnet,**
**dass** die Umlenkeinrichtung (55, 57) zumindest zu einem wesentlichen Teil zwischen den Trumen (30, 32) des Riemens (15) angeordnet ist.

6. Vorrichtung nach Anspruch 4 oder 5,
**dadurch gekennzeichnet ,**
**dass** die Umlenkeinrichtung (35, 37, 55, 57) wenigstens eine, insbesondere quer zur Drehachse der Primärwelle (19), bewegbare Tänzerrolle (42) umfasst, wobei insbesondere der Tänzerrolle (42) wenigstens eine ortsfeste Umlenkrolle (40, 44) zugeordnet ist.

7. Vorrichtung nach einem der Ansprüche 4 bis 6,
**dadurch gekennzeichnet ,**
**dass** die Umlenkeinrichtung (65, 67) ein um eine Schwenkachse (A) verdrehbares Umlenkrollenpaar (70, 72) umfasst, wobei der Riemen (15) zwischen den beiden Umlenkrollen hindurch läuft.

8. Vorrichtung nach einem der vorstehenden Ansprüche,
**dadurch gekennzeichnet ,**
**dass** an jedem Trum (30, 32) eine Umlenkeinrichtung (35, 37, 65, 67) vorgesehen ist, wobei die Umlenkeinrichtungen (35, 37, 65, 67) zwangsgekoppelt und insbesondere an einem gemeinsamen, zum Verändern der Lauflängen des Riemens (15) bewegbaren Träger (46, 74) montiert sind.

9. Vorrichtung nach einem der vorstehenden Ansprüche,
**dadurch gekennzeichnet ,**
**dass** an dem einen Trum (30) eine aktiv verstellbare Umlenkeinrichtung (55) vorgesehen ist, wobei an dem anderen Trum (32) eine passive, insbesondere federbelastete, Umlenkeinrichtung (57) vorgesehen ist, die der Verstellbewegung der aktiven Umlenkeinrichtung (55) folgt.

10. Vorrichtung nach einem der vorstehenden Ansprüche,
**dadurch gekennzeichnet ,**
**dass** jeder Riementrieb (14) zwischen den gemeinsamen Antrieb und die zugehörige Fördereinrichtung (13) geschaltet ist.

11. Vorrichtung nach einem der vorstehenden Ansprüche,
**dadurch gekennzeichnet ,**
**dass** jeder Riementrieb (14) selbst als Bandförderer ausgebildet ist, wobei der Riemen (15) als Produktauflage für ein aufzuschneidendes Produkt (17) dient.

12. Verfahren zum Aufschneiden von Lebensmittelprodukten, insbesondere mittels einer Vorrichtung nach einem der vorhergehenden Ansprüche, bei dem
- mittels einer Produktzuführung (11),
die mehrere parallel nebeneinander angeordnete Fördereinrichtungen (13) umfasst,
gleichzeitig mehrere Produkte (17) einer Schneidebene (S) zugeführt werden, in der sich wenigstens ein Schneidmesser (23), insbesondere rotierend und/oder umlaufend, bewegt,
- die Fördereinrichtungen (13), welche jeweils einen Riementrieb (14) mit einer von dem gemeinsamen Antrieb antreibbaren Primärwelle (19), einer Sekundärwelle (21) und einem Riemen (15) mit zwei zwischen der Primärwelle (19) und der Sekundärwelle (21) verlaufenden Trumen (30, 32) umfassen, mittels eines gemeinsamen Antriebs angetrieben werden, und
- für jeden Riemen (15) die Lauflängen in den beiden Trumen (30, 32) unter Beibehaltung der Gesamtlauflänge bei Bedarf individuell verändert werden, um für jedes Produkt (17) die Dicke abzutrennender Produktscheiben individuell einzustellen.

13. Verfahren nach Anspruch 12,
**dadurch gekennzeichnet,**
**dass** jede Fördereinrichtung (13) von dem gemeinsamen Antrieb über den zugehörigen Riementrieb (14), insbesondere über die zugehörige Sekundärwelle (21), angetrieben wird.

14. Verfahren nach Anspruch 12 oder 13,
**dadurch gekennzeichnet,**
**dass** jeder Riementrieb (14) selbst als Bandförderer ausgebildet ist, wobei die Produkte (17), während sie der Schneidebene (S) zugeführt werden, auf dem Riemen (15) aufliegen.

15. Verfahren nach einem der Ansprüche 12 bis 14,
**dadurch gekennzeichnet ,**
**dass** für jeden Riemen (15) die Lauflängen in den beiden Trumen (30, 32) in Abhängigkeit von der Kontur des Produktes (17) verändert werden, wobei vorzugsweise die Kontur des Produktes (17) mit einer in die Vorrichtung integrierten Erfassungseinrichtung ermittelt wird.

## Claims

1. An apparatus for the slicing of food products, in particular a high-performance slicer, comprising
a product feed (11) which comprises a plurality of conveying devices (13) arranged in parallel next to one another which can be driven together in order simultaneously to feed a plurality of products (17), with which a respective one of the conveying devices (13) is associated, to a cutting plane (S) in which at least one cutting blade (23) moves, in particular in a rotating and/or revolving manner, wherein the conveying devices (13) have a common drive and each comprise a belt drive (14) having a primary shaft (19) which can be driven by the common drive (19), a secondary shaft (21) and a belt (15) having two runs (30, 32) extending between the primary shaft (19) and the secondary shaft (21);
wherein a setting apparatus (25) is associated with each belt drive (14) and is configured to vary the running lengths of the belt (15) in the two runs (30, 32) while maintaining the total running length in order individually to vary the rotational speed of the secondary shaft (21) and thus the individual conveying speed of the conveying device (13).

2. An apparatus in accordance with claim 1,
**characterised in that**
each setting apparatus (25) comprises a variable buffer region for taking up or passing out a belt section running off from the primary shaft (19) or running onto the primary shaft (19) in order to vary the running lengths at each run (30, 32).

3. An apparatus in accordance with claim 1 or claim 2,
**characterised in that**
the running lengths for each belt (15) can be varied at a predefined variation speed during the slicing operation with a rotating belt (15).

4. An apparatus in accordance with any one of the preceding claims,
**characterised in that**
a movable deflection device (35, 37, 55, 57, 65, 67) is provided for the belt (15) at at least one run (30, 32), preferably at each run (30, 32).

5. An apparatus in accordance with claim 4,
**characterised in that**
the deflection device (55, 57) is arranged at least in a substantial amount between the runs (30, 32) of the belt (15).

6. An apparatus in accordance with claim 4 or claim 5,
**characterised in that**
the deflection device (35, 37, 55, 57) comprises at least one dancer roller (42), in particular movable transversely to the axis of rotation of the primary shaft (19), with at least one stationary deflection roller (40, 44) in particular being associated with the dancer roller (42).

7. An apparatus in accordance with any one of the claims 4 to 6,
**characterised in that**
the deflection device (65, 67) comprises a deflection roller pair (70, 72) rotatable about a pivot axis (A), with the belt (15) running through between the two deflection rollers.

8. An apparatus in accordance with any one of the preceding claims,
**characterised in that**
a deflection device (35, 37, 65, 67) is provided at each run (30, 32), with the deflection devices (35, 37, 65, 67) being forcibly coupled and in particular being mounted at a common support (46, 74) movable to vary the running lengths of the belt (15).

9. An apparatus in accordance with any one of the preceding claims,
**characterised in that**
an actively adjustable deflection device (55) is provided at the one run (30), with a passive deflection device (57), in particular a springloaded deflection device, being provided at the other run (32) and following the adjustment movement of the active deflection device (55).

10. An apparatus in accordance with any one of the preceding claims,
**characterised in that**
each belt drive (14) is connected between the common drive and the associated conveying device (13).

11. An apparatus in accordance with any one of the preceding claims,
**characterised in that**
each belt drive (14) is itself configured as a band conveyor, with the belt (15) serving as a product support for a product (17) to be sliced.

12. A method for the slicing of food products, in particular by means of an apparatus in accordance with any one of the preceding claims, wherein
- by means of a product feed (11),
which comprises a plurality of conveying devices (13) arranged in parallel next to one another,
a plurality of products (17) are fed simultaneously to a cutting plane (S) in which at least one cutting blade (23) moves, in particular in a rotating and/or revolving manner;
- the conveying devices (13), which each comprise a belt drive (14) having a primary shaft (19) drivable by a common drive, a secondary shaft (21) and a belt (15) having two runs (30, 32) extending between the primary shaft (19) and the secondary shaft (21), are driven by means of a common drive; and
- the running lengths for each belt (15) in the two runs (30, 32) are individually varied as required while maintaining the total running length in order individually to set the thickness of product slices to be cut off for each product (17).

13. A method in accordance with claim 12,
**characterised in that**
each conveying device (13) is driven by the common drive via the associated belt drive (14), in particular via the associated secondary shaft (21).

14. A method in accordance with claim 12 or claim 13,
**characterised in that**
each belt drive (14) is itself configured as a band conveyor, with the products (17) lying on the belt (15) while they are fed to the cutting plane (S).

15. A method in accordance with any one of the claims 12 to 14,
**characterised in that**
the running lengths for each belt (15) in the two runs (30, 32) are varied in dependence on the contour of the product (17), with the contour of the product (17) preferably being determined using a detection device integrated into the apparatus.

## Revendications

1. Appareil pour découper des produits alimentaires, en particulier trancheuse à haute vitesse, comprenant
une amenée de produits (11), qui inclut plusieurs systèmes de convoyage (13) agencés parallèlement les uns à côté des autres et qui peuvent être entraînés en commun, afin d'amener simultanément plusieurs produits (17), à chacun desquels est associé l'un des systèmes de convoyage (13), à un plan de coupe (S) dans lequel se déplace au moins un couteau de coupe (23), en particulier en rotation et/ou en circulation, dans lequel les systèmes de convoyage (13) comprennent un entraînement commun et incluent respectivement un mécanisme à courroie (14) avec un arbre primaire (19) susceptible d'être entraîné par l'entraînement commun, un arbre secondaire (21), et une courroie (15) avec deux brins (30, 31) s'étendant entre l'arbre primaire (19) et l'arbre secondaire (21),
dans lequel un dispositif de réglage (25) est associé à chaque mécanisme à courroie (14), dispositif qui est réalisé pour modifier les longueurs de parcours de la courroie (15) dans les deux brins (30, 32) en conservant la longueur de parcours totale, afin de modifier individuellement la vitesse de rotation de l'arbre secondaire (21) et ainsi la vitesse de convoyage individuelle du système de convoyage (13).

2. Appareil selon la revendication 1,
**caractérisé en ce que** chaque dispositif de réglage (25) inclut, pour modifier les longueurs de parcours au niveau de chaque brin (30, 32), une zone tampon variable pour absorber pour délivrer un tronçon de courroie partant de l'arbre primaire (19) ou respectivement arrivant à l'arbre primaire (19).

3. Appareil selon la revendication 1 ou 2,
**caractérisé en ce que** pour chaque courroie (15) les longueurs de parcours sont modifiables pendant le fonctionnement en découpe alors que la courroie (15) est en circulation, avec une vitesse de modification prédéterminée.

4. Appareil selon l'une des revendications précédentes,
**caractérisé en ce qu'**il est prévu un dispositif de renvoi déplaçable (35, 37, 55, 57, 65, 67) pour la courroie (15), au moins au niveau d'un brin (30, 32), de préférence au niveau de chaque brin (30, 32).

5. Appareil selon la revendication 4,
**caractérisé en ce que** le dispositif de renvoi (55, 57) est agencé au moins sur une partie essentielle entre les brins (30, 32) de la courroie (15).

6. Appareil selon la revendication 4 ou 5,
**caractérisé en ce que** le dispositif de renvoi (35, 37, 55, 57) inclut au moins un rouleau fou (42) déplaçable, en particulier perpendiculairement à l'axe de rotation de l'arbre primaire (19), et en particulier dans lequel au moins un rouleau de renvoi stationnaire (40, 44) est associé au rouleau fou (42).

7. Appareil selon l'une des revendications 4 à 6,
**caractérisé en ce que** le dispositif de renvoi (65, 67) inclut une paire de rouleaux de renvoi (70, 72) capables de pivoter autour d'un axe de pivotement (A), et la courroie (15) passe à travers les deux rouleaux de renvoi.

8. Appareil selon l'une des revendications précédentes,
**caractérisé en ce qu'**il est prévu un dispositif de renvoi (35, 37, 65, 67) au niveau de chaque brin (30, 32), et les dispositifs de renvoi (35, 37, 65, 67) sont accouplés à force et sont en particulier montés sur un support (46, 74) commun, déplaçable pour modifier les longueurs de parcours de la courroie (15).

9. Appareil selon l'une des revendications précédentes,
**caractérisé en ce qu'**il est prévu sur l'un des brins (30) un dispositif de renvoi (55) réglable de manière active, et dans lequel il est prévu sur l'autre brin (32) un dispositif de renvoi passif (57), en particulier chargé par un ressort, qui suit le mouvement de réglage du dispositif de renvoi actif (55).

10. Appareil selon l'une des revendications précédentes,
**caractérisé en ce que** chaque mécanisme à courroie (14) est intercalé entre l'entraînement commun et le système de convoyage (13) associé.

11. Appareil selon l'une des revendications précédentes,
**caractérisé en ce que** chaque mécanisme à courroie (14) est réalisé lui-même sous forme de convoyeur à bande, dans lequel la courroie (15) sert de support pour un produit (17) qu'il s'agit de découper.

12. Procédé pour découper des produits alimentaires, en particulier au moyen d'un appareil selon l'une des revendications précédentes, dans lequel
- au moyen d'une amenée de produits (11),
qui inclut plusieurs systèmes de convoyage (13) agencés parallèlement les uns à côté des autres,
on amène simultanément plusieurs produits (17) à un plan de coupe (S), dans lequel se déplace au moins un couteau de coupe (23), en particulier en rotation et/ou en circulation,
- les systèmes de convoyage (13), qui incluent chacun un mécanisme à courroie (14) avec un arbre primaire (19) susceptible d'être entraîné par l'entraînement commun, un arbre secondaire (21), et une courroie (15) avec deux brins (30, 32) s'étendant entre l'arbre primaire (19) et l'arbre secondaire (21), sont entraînés au moyen d'un entraînement commun, et
- pour chaque courroie (15) on modifie les longueurs de parcours dans les deux brins (30, 32) individuellement selon les besoins tout en conservant la longueur de parcours totale, afin de régler individuellement pour chaque produit (17) l'épaisseur de tranches de produits à découper.

13. Procédé selon la revendication 12,
**caractérisé en ce que** chaque système de convoyage (13) est entraîné par l'entraînement commun via le mécanisme à courroie associé (14), en particulier via l'arbre secondaire (21) associé.

14. Procédé selon la revendication 12 ou 13,
**caractérisé en ce que** chaque mécanisme à courroie (14) est réalisé lui-même sous forme de convoyeur à bande, dans lequel les produits (17) reposent sur la courroie (15) pendant qu'ils sont amenés au plan de coupe (S).

15. Procédé selon l'une des revendications 12 à 14,
**caractérisé en ce que** pour chaque courroie (15) on modifie les longueurs de parcours dans les deux brins (30, 32) en fonction du contour du produit (17), et le contour du produit (17) est de préférence déterminé au moyen d'un système de détection intégré dans l'appareil.
